# EUROPEAN PATENT APPLICATION

(11) **EP 2 650 962 A1**
(43) Date of publication of application: **16.10.2013**
(21) Application number: 12163860.5
(22) Date of filing: 12.04.2012
(51) Int. Cl.: H01Q 1/18, H01Q 3/08, F16M 11/12, H01Q 1/34

(54) **Antenna support system**

(71) Applicant: Satcube AB, 402 32 Göteborg (SE)
(72) Inventor: Kallmèr, Jakob, 41122 Göteborg (SE)
(74) Representative: Lind, Urban Arvid Oskar

(57) **Abstract**

Antenna support system (250) for arrangement on a moving vessel, the antenna support system comprising: a lower stabilizing platform (104) comprising a pitch actuator (210) for controlling movement about a pitch axis (306) of the lower stabilizing platform, and a roll actuator (218) for controlling movement about a roll axis (308) of the lower stabilizing platform; a sensing device (238) configured to detect a pitch orientation and a roll orientation in relation to a horizontal plane (304); first control circuitry connected to the sensing device and to the pitch actuator and the roll actuator, the first control circuitry being configured to acquire pitch and roll parameters from the sensing device and to control the pitch actuator and the roll actuator to maintain a predetermined orientation of the lower stabilizing platform in relation to the horizontal plane; an upper directing platform (106) attached to the lower stabilizing platform and comprising an antenna orientation arrangement (108); second control circuitry connected to the antenna orientation arrangement and configured to control an orientation of the antenna orientation arrangement in response to an input signal indicating a desired antenna orientation; wherein the first control circuitry and the second control circuitry operate independently of each other.

## Description

### Field of the Invention

The present invention relates to a platform for a satellite antenna.

More particularly, the present invention relates to an antenna support system.

### Technical Background

Various types of platforms are used for directing an antenna for satellite communication towards a communication satellite. In particular for satellite communication antennas mounted on a moving vehicle, it is important that an antenna platform is able to adapt to the movements of the vehicle so that the antenna is always directed at the satellite. Furthermore, satellite antennas are commonly used on marine vessels where it is required that an antenna platform is able to compensate for the movements of the vessel.

For accurately compensating for the movements of a vessel, an antenna platform comprising three axes, azimuth, elevation, and polarization, may be used to compensate for pitch and roll of the vessel.

However, at high and low elevation positions of the antenna, e.g. at positions close to the end-of-range rotational positions of the elevation axis, the azimuth and polarization axes may have to work fast to compensate for pitch and roll of the vessel. Furthermore, under some circumstances, the azimuth and polarization axes may be unable to correctly compensate for pitch and roll movements of the vessel.

In order to alleviate the abovementioned problem, an antenna platform introducing a fourth axis arranged orthogonally to the elevation axis, commonly referred to as a cross axis, may be used. An antenna platform comprising a cross axis requires less overall movement when compensating for pitch and roll movements. However, such a four-axis platform still requires that all four axes have high angular velocity and high angular acceleration over the entire effective angular range. Thus, an antenna platform using four axes still requires high performance components for controlling all four axes which leads to a high cost of the overall platform.

### Summary of the Invention

In view of the above-mentioned and other drawbacks of the prior art, a general object of the present invention is to provide an improved satellite antenna support system for use on a moving vessel.

According to a first aspect of the invention, there is provided an antenna support system for arrangement on a moving vessel, the antenna support system comprising: a lower stabilizing platform comprising a pitch actuator for controlling movement about a pitch axis of the lower stabilizing platform, and a roll actuator for controlling movement about a roll axis of the lower stabilizing platform; a sensing device configured to detect a pitch orientation and a roll orientation in relation to a horizontal plane; first control circuitry connected to the sensing device and to the pitch actuator and the roll actuator, the first control circuitry being configured to acquire pitch and roll parameters from the sensing device and to control the pitch actuator and the roll actuator to maintain a predetermined orientation of the lower stabilizing platform in relation to the horizontal plane; an upper directing platform attached to the lower stabilizing platform and comprising an antenna orientation arrangement; second control circuitry connected to the antenna orientation arrangement and configured to control an orientation of the antenna orientation arrangement in response to an input signal indicating a desired antenna orientation; wherein the first control circuitry and the second control circuitry operate independently of each other.

The antenna support system according to the present invention may typically be used for supporting an antenna for satellite communication on a marine vessel. However, the vessel may equally well be an amphibian vessel such as a hovercraft or a landing craft, or a land based vessel where reliable satellite communication is desirable. The antenna support system may be particularly useful in land based communication systems such as SOTM (Satcom On The Move) and COTM (Communication On The Move).

In the present context, pitch and roll should be understood as the rotation around the x and y axes in xyz space, as defined in a Cartesian coordinate system, where the xy-plane is the horizontal plane. The pitch and roll axes are defined in relation to the vessel on which the antenna support is mounted, where roll is defined as rotation around the longitudinal axis and pitch is defined as rotation around the lateral axis of the vessel. The antenna support may be arranged in any orientation on the vessel. However it is preferred that the antenna support is mounted essentially aligned with the horizontal plane in order to best utilize the full movement range of the platform. It is typically preferred that the predetermined orientation of the lower stabilizing platform is in alignment with the horizontal plane.

Both the first and the second control circuitry may each be provided in the form a single control unit. Such a control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. Furthermore, the control circuitry may be configured to communicate with external units through any suitable communication interface such as for example a CAN-bus, Ethernet etc.

Furthermore, the second control circuitry configured to control the orientation of the antenna orientation arrangement may receive instructions regarding a desired orientation of an antenna connected to the antenna support based on a travel direction of the vessel, a position of the vessel and coordinates of a specific satellite. For example, the second control circuitry may receive instructions based on an orientation detection device of the vessel such as a gyroscope.

The fast movements required to compensate for pitch and roll movements in a four axis platform may lead to excessive wear of the mechanical components in the antenna platform. Thereby, as all four axes are actively engaged in compensating for pitch and roll movements, the mean time between failures (MTBF) for components in such a platform may be low.

Accordingly, the present invention is based on the realization that it is advantageous to handle pitch and roll compensation of an antenna support system in a separate lower stabilizing platform which is controlled so as to maintain an upper antenna directing platform in alignment with the horizontal plane. As the lower stabilizing platform is separated from the upper directing platform, the stabilizing platform may be specifically adapted for handling the pitch and roll movements which are relatively fast in relation to the movements required for the antenna orientation arrangement. In other words, the stabilizing platform may utilize components more suitable for the fast movements while the antenna directing platform may use components adapted to the slower movements required to direct the antenna. As a result, mechanical wear and tear of components in both platforms is reduced and the mean time between failures (MTBF) can thereby be increased. Furthermore, as the components may in the respective platforms may be more specialized compared to in known antenna support systems where the same components are used for pitch and roll compensation as for antenna orientation, the components in a system according to the present invention may be dimensioned to provide an antenna support system having increased reliability without increasing overall complexity and cost.

According to one embodiment of the invention, the antenna support system may further comprise a damping arrangement comprising at least one active damper configured to reduce propagation of vibrations from the vessel to the upper directing platform. As vibrations are a major source of wear and tear of moving parts in mechanical systems, it is highly desirable to reduce vibrations in such systems. By introducing a damping arrangement in the antenna support system, vibrations are reduced and the MTBF of the system may be increased. The damping arrangement is configured to reduce vibrations in the range of approximately 0 to 200 Hz. The damping arrangement is also configured to absorb shocks which in a marine vessel may come from wave pounding. An active damper may be configured in a large number of ways as realized by the person skilled in the art. The active damping element in an active damper may for example be a mechanical actuator, a hydraulic actuator or a piezoelectric actuator. The active damping element may also be used together with one or more passive damping elements.

In one embodiment of the present invention, the active damper may comprise an actuator arranged in parallel with a passive damping element. The active damper may for example be configured to reduce vibrations having frequencies approximately between 0 and 5 Hz. The frequency range is in general determined by the speed of the active element, thereby damping for vibrations in different frequency ranges may be achieved by using different types of active damping element.

Furthermore, the passive damping element may advantageously comprise an axial damper arranged on at least one of the pitch axis and the roll axis. The axial damper in principal acts as a damper in parallel with a spring which in turn is arranged in parallel with the actuator in order to form the active damper. Preferably, axial dampers are arranged between both the pitch axis and the roll axis and their respective support structures in order to reduce the amount of vibrations reaching the upper directing platform and the antenna orientation arrangement. The axial damper also dampens the rotation about the pitch and roll axes provided by the pitch and roll actuators. The aforementioned axial damper is merely an example and it should be understood that it is equally possible to use a passive damping element according to any of the large number of dampers commercially available, such as for example spring based dampers, elastic dampers or viscous friction dampers.

According to one embodiment of the invention the antenna support system may further comprise a support structure for fixing the lower stabilizing platform to a vessel, and at least one damper arranged between the support structure and the lower stabilizing platform. By arranging a damper between the support structure and the vessel, the amount of vibrations reaching the lower stabilizing platform can be reduced. Thereby, mechanical wear of the pitch and roll axes may be reduced.

The damper arranged between the support structure and the vessel may comprise a passive damping element. The damper arranged between the support structure and the lower stabilizing platform effectively acts in series with the aforementioned active damper, thereby forming a damping arrangement comprising the aforementioned actuator acting in parallel with the wire damper which in turn acts in series with the passive damper arranged between the support structure and the lower stabilizing platform.

In particular the passive damping element arranged between the support structure and the lower stabilizing platform may advantageously comprise a wire-rope damper. A wire-rope damper may advantageously be used in the present context as it generally has a low natural frequency. In particular, a wire-rope damper may advantageously be used for reducing vibrations having frequencies from approximately 5 Hz up to 200 Hz. The wire-rope damper is also well suited for shock isolation, thereby acting as a shock-absorber reducing the detrimental effects wave pounding and similar events have on the antenna support system. Accordingly, wire-rope isolators are well suited when the operating environment involves combined shock and vibration which is due to the fact that they offer large deflections in relation to their size. However, it is equally possible to use other passive dampers such as elastic rubber dampers to achieve a similar damping effect. Furthermore, while the aforementioned active damper may handle vibrations having relatively large amplitudes determined by the range of the actuator, the passive damper, here represented by a wire-rope damper, is configured to handle vibrations having relatively small amplitudes.

According to one embodiment of the invention, the antenna orientation arrangement may advantageously comprise an antenna holder; an azimuth actuator for controlling an azimuth orientation of an antenna connected to the antenna holder; an elevation actuator for controlling an elevation of an antenna connected to the antenna holder; and a polarization actuator for controlling a polarization orientation of an antenna connected to the antenna holder. As it is desirable to be able to control an antenna independently of the lower stabilizing platform, the antenna orientation arrangement of the upper directing platform comprises actuators for controlling the azimuth, elevation and polarization orientations of an antenna connected to the antenna orientation arrangement. The antenna may typically be provided in the form of a parabolic antenna where the polarization orientation may be controlled by rotating the antenna around its central axis. The actuators may for example be servo motors or step motors. However, the antenna support system is equally suitable for use with other types of antennas such as lens antennas or phase array antennas. Furthermore, the polarization orientation may for example be controlled by rotating the feeder of the antenna. Moreover, in the case where circularly polarized signals are used, the antenna does not have to be rotated to follow the polarization of the signal.

In one embodiment of the invention, the sensing device may advantageously be arranged on the upper directing platform. As the sensing device is configured to detect a pitch orientation and a roll orientation in relation to the horizontal plane, and to provide that information to the first control circuitry which controls the pitch and roll actuators, it is advantageous to arrange the sensing device on the upper directing platform which is maintained in alignment with the horizontal plane. Thereby, the sensing device always responds to relatively small angles of inclination which is the range where the sensing device may be both faster and more sensitive. Thus, the control circuitry responds directly to deviations from the horizontal plane of the lower stabilizing platform.

In one embodiment of the invention, the sensing device may be a two-axis inclinometer. There are several types of sensing devices which are capable of detecting the pitch and roll orientation such as gyroscopes, accelerometers, inclinometers and other tilt sensors. However, an inclinometer may advantageously be used as it is relatively small and cheap while providing sufficient accuracy. Furthermore, instead of a two-axis inclinometer, two single-axis inclinometers may be used.

According to one embodiment of the invention, the first control circuitry may advantageously operate only in response to said acquired pitch and roll parameters from said sensing device. The first control circuitry regulates the lower stabilizing platform so that it is maintained in alignment with the horizontal plane. Accordingly, the first control circuitry only needs information about the orientation of the upper lower stabilizing platform, which is provided by the aforementioned sensing device. Thereby, the first control circuitry may be seen as acting autonomously in that it is not connected to any external control system or to the second control circuitry for controlling the antenna orientation arrangement. By acting autonomously, the first control circuitry does not have to be adapted to communicate with external systems, thereby it may be made simple and compact. Moreover, it does not have to be otherwise compatible with any other systems of the vessel on which the antenna support system is mounted. However, the first control circuitry may be connected to an external power supply.

Furthermore, the first control circuitry may advantageously comprise at least one microcontroller.

In one embodiment of the invention, the second control circuitry may be configured to control the antenna orientation arrangement in response to control signals received from an external control unit. The second control circuitry is configured to control the antenna orientation arrangement so that an antenna is directed towards a selected satellite. The second control circuitry may for example receive control signals from an external unit regarding the global coordinates of the vessel, the heading of the vessel and/or instructions regarding the position of the satellite, thereby determining the desired antenna orientation. Additionally, the second control circuitry may also control the antenna orientation based on properties of the signal received by the antenna.

Furthermore, the antenna support system according to various embodiments of the invention may be provided as a component in an antenna system comprising a parabolic antenna connected to the antenna orientation arrangement of the antenna support system; and an antenna radome; wherein the parabolic antenna and the upper directing platform comprised in the antenna support system are arranged within the antenna radome and wherein the lower stabilizing platform is arranged outside of the antenna radome. By providing an antenna support system where the lower stabilizing platform for compensating for pitch and roll movements is arranged outside of the antenna radome, the antenna system may be made significantly smaller which is advantageous both as reduction of the volume reduces the cost of the system and as the antenna system takes up a smaller area on the vessel on which it is mounted.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

The present invention will now be described in more detail with reference to the appended drawings showing example embodiments of the invention, wherein:
Fig. 1 schematically illustrates an antenna system according to an embodiment of the invention;
Fig. 2 schematically illustrates an exploded view of the antenna support system according to an embodiment of the invention;
Figs. 3a to 3c schematically illustrate various operating positions of the lower platform of the antenna support system according to an embodiment of the invention;
Fig. 4 schematically illustrates the upper platform of the antenna support system according to an embodiment of the invention; and
Fig. 5 illustrates an exemplary schematic damping arrangement for the antenna support system according to an embodiment of the invention.

### Detailed Description of Preferred Embodiments of the Invention

In the present detailed description, various embodiments of an antenna support system according to the present invention are mainly discussed with reference to an antenna system comprising a parabolic antenna for satellite communication for mounting on a marine vessel. It should be noted that this by no means limits the scope of the present invention which is equally applicable for antenna support systems for mounting on any sort of moving vehicle.

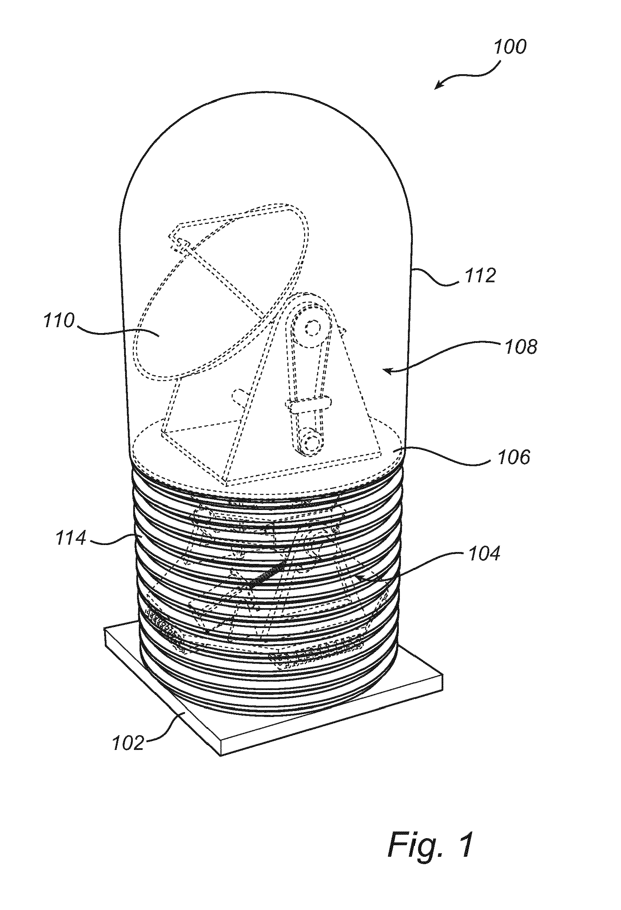

Fig. 1 schematically illustrates an antenna system 100 comprising an antenna support system arranged on a platform 102. The platform 102 may be connected to the vessel, or it may be part of the vessel on which the antenna system 100 is mounted. The antenna support system is formed by a lower stabilizing platform 104 and an upper directing platform 106 on which an antenna orientation arrangement 108 is arranged. A parabolic antenna 110 is mounted on the antenna orientation arrangement 108. The upper directing platform 106 and the antenna orientation arrangement 108 is covered by an antenna radome 112 and the lower stabilizing platform is protected by a flexible cover 114 for example made from a plastic or rubber material.

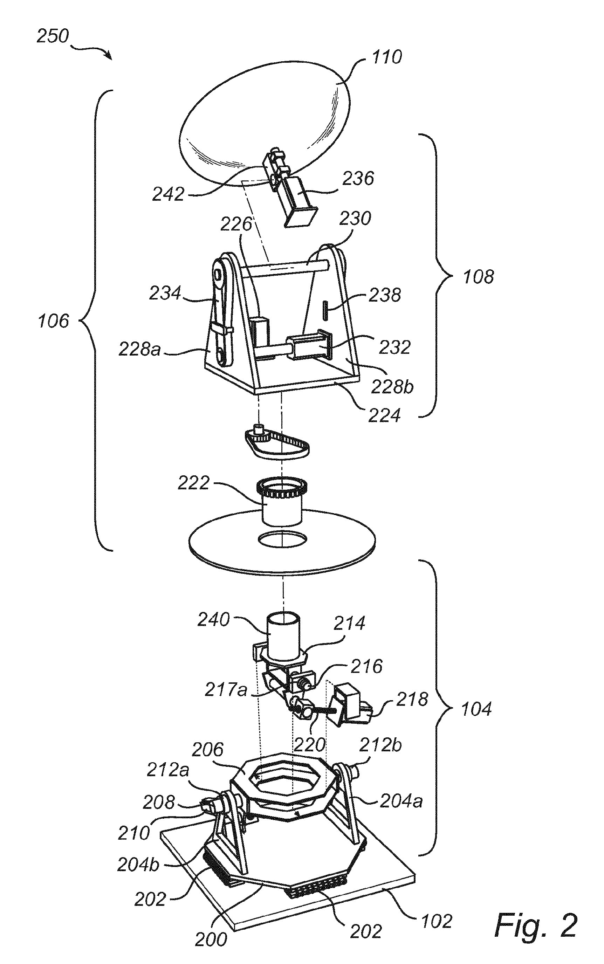

Fig. 2 is an exploded view of the antenna support system 250 illustrating different parts of the lower stabilizing platform 104 and the antenna orientation arrangement 108.

The lower stabilizing platform 104 comprises a base plate 200 connected to the platform102 via wire-rope dampers 202. On the base plate 200, two support elements 204a, 204b are arranged to support a rotatably connected pitch platform 206 so that the pitch platform 206 may rotate around a pitch axle 208. A pitch actuator 210 is arranged on the base plate 200 and connected to the pitch platform 206 through a ball screw 302 for controlling the rotation of the pitch platform 206 around the pitch axis 306. Furthermore, axial dampers 212a-b are arranged between the pitch axis 208 and the support elements 204a, 204b.

Next, a roll platform 214 is rotatably connected by a roll axle 216 to the pitch platform 206 so that the roll platform 214 may rotate around the roll axis 308. Axial dampers 217a-b are arranged between the roll axle 216 and the pitch platform 206. A roll actuator 218 is arranged suspended from the pitch platform 206 and connected to the roll platform 214 through a ball screw 220 for controlling the rotation of the roll platform 214 around the roll axis 308. Note that the definitions of the pitch and roll axes are arbitrary and interchangeable, the axes may equally well be generally referred to as an x-axis, and an y-axis. In the present context, the pitch and roll notation is selected for clarity and for reference to the common notation for movements of a marine vessel.

The upper directing platform 106 comprising the antenna orientation arrangement 108 is connected to the lower stabilizing platform 104 via a connecting element 222 which is rotatably connected to a corresponding connecting element 240 of the lower stabilizing platform 104. The antenna orientation arrangement 108 comprises a base plate 224 on which an azimuth actuator 226 is arranged for controlling the azimuthal rotation of the antenna orientation arrangement 108. Furthermore, two support elements 228a-b support an elevation axle 230 on which a parabolic antenna 110 is mounted via an antenna holder 242. Furthermore, an elevation actuator 232 is connected to the elevation axle 230 via drive belts 234 for controlling the elevation of the antenna 110. A polarization actuator 236 is connected to the antenna 110 for controlling the polarization orientation of the antenna 110 through rotation around the polarization axis.

Moreover, a pitch and roll sensing device 238 in the form of a two-axis inclinometer is arranged on one of the support elements of the antenna orientation arrangement 108. However, the sensing device 238 may be arranged essentially anywhere on the upper directing platform 106.

The described actuators are typically servo motors or step motors, depending on the desired performance of the motors. As the pitch and roll movements are faster than the movements in azimuth, elevation and polarization, actuators having higher performance are selected as pitch and roll actuators 210, 218. In the present example, the pitch and roll actuators 210, 218 are servo motors having a maximum angular velocity of 25 deg/s and a maximum angular acceleration of 25 deg/s². The azimuth and elevation actuators 223, 232, may be selected as servo motors having a maximum angular velocity of 15 deg/s and a maximum angular acceleration of 15 deg/s². The polarization actuator 236 may have a maximum angular velocity of 5 deg/s and a maximum angular acceleration of 7 deg/s².

As the pitch and roll actuators 210, 218 also act as active damping elements in the damping arrangement, the performance of the damping arrangement depends on the performance of the actuators. In particular, the frequency range of vibrations for which the active damper is able to compensate is related to the angular velocity and angular acceleration of the actuators. Accordingly, faster actuators offer a greater frequency range for which vibrations may be reduced through the active damping element. Fast actuators such as piezoelectric actuators may for example be used. However, the actuator must also have a certain angular working range which may not be provided by piezoelectric actuators. In the present example, the pitch and roll actuators 210, 218 in combination with a ball-screw provide an angular range of approximately ± 25°.

External power supply and control signal connections for the antenna orientation arrangement may be provided via the lower stabilizing platform 104 through rotating electrical connectors such as sliding couplings or through twistable cables.

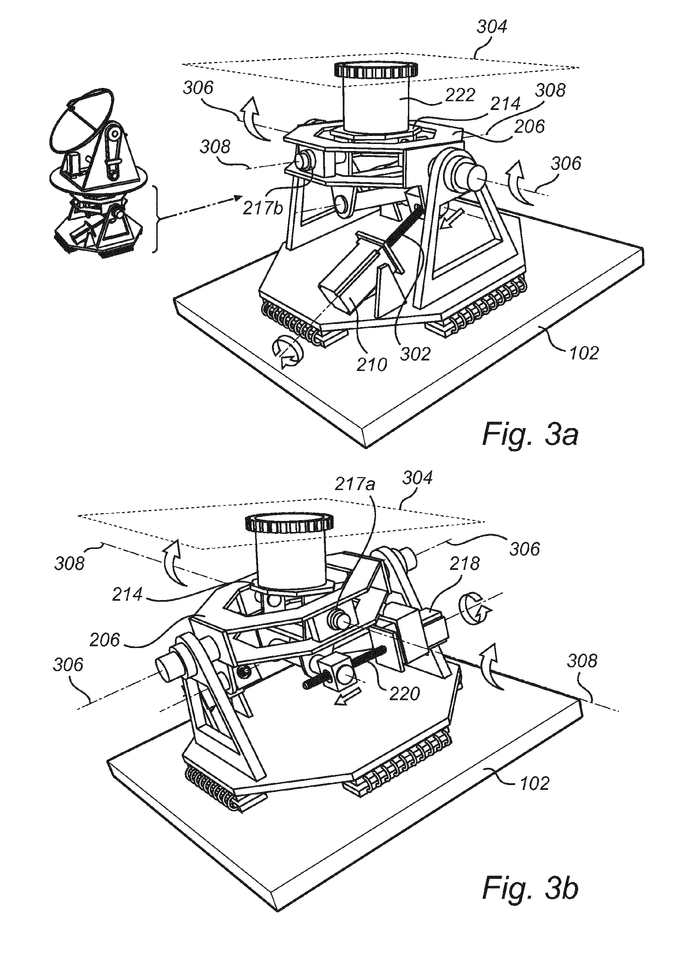

Figs. 3a to 3c illustrate how the lower stabilizing platform 104 operates when the vessel on which the antenna system 100 is mounted is exposed to pitch and roll movements. The alignment of the vessel in relation to the horizontal plane 304 is represented by the alignment of the platform 102 in relation to the horizontal plane 104. The alignment of the connecting element 222 and the roll platform 214 corresponds to the alignment of the antenna orientation arrangement 108.

In Fig. 3a, the vessel is rotated around the pitch axis 306, the change in inclination is detected by the inclinometer which transmits a control signal to the pitch actuator 210 so that the pitch platform 206 is rotated to a position where it is aligned with the horizontal plane 304.

Similarly, Fig. 3b illustrates a rotation of the vessel around the roll axis 308, the change in inclination is detected by the inclinometer which transmits a control signal to the roll actuator 218 so that the roll platform 214 is rotated to a position where it is aligned with the horizontal plane 304.

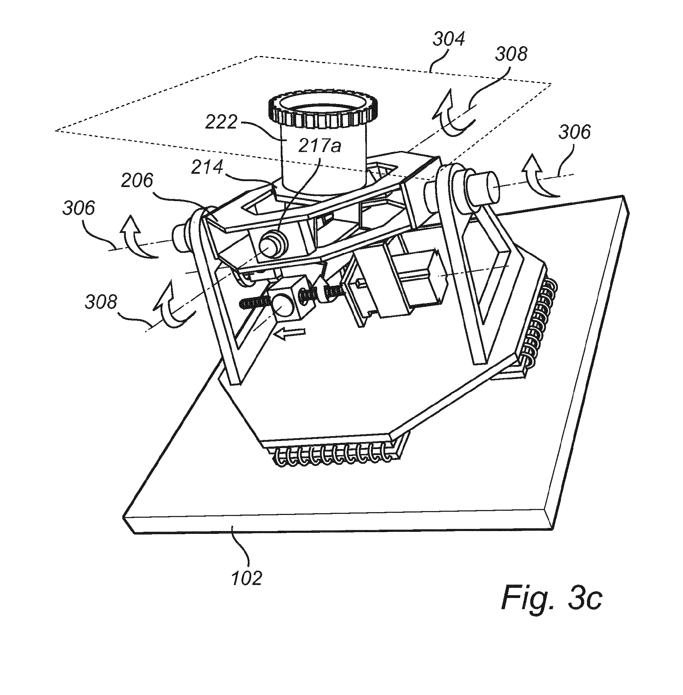

In Fig. 3c, the vessel is rotated around both the pitch axis 306 and the roll axis 308, the inclinometer detects the change in inclination and controls the pitch and roll actuators 210, 218 to align the roll platform with the horizontal plane 304.

The first control circuitry (not shown) for acquiring pitch and roll parameters from the sensing device and for controlling the pitch and roll actuators based on the acquired parameters is typically arranged on the lower stabilizing platform 104 with a wired connection to the inclinometer 238 arranged on the upper directing platform 106.

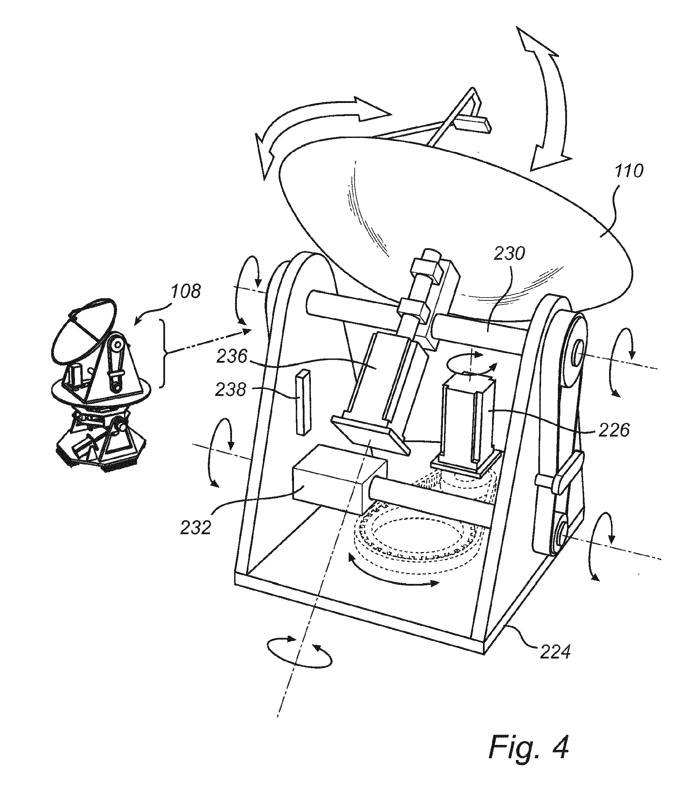

Fig. 4 illustrates the upper directing platform 106 comprising the antenna orientation arrangement 108. During operation, the antenna orientation arrangement 108 is maintained in alignment with the horizontal plane 304. Accordingly, the antenna orientation arrangement 108 controls the orientation of the antenna with respect to azimuth, elevation and polarization so that a desired signal from a selected satellite is received. The second control circuitry (not shown) for controlling the azimuth, elevation and polarization actuators, 226, 232 and 236, typically receive instructions from one or more systems onboard the vessel. Typically, the second control circuitry may receive positioning information from a global positioning system (GPS), heading information from a gyroscope and satellite position information based information stored on a server. Furthermore, the second control circuitry may also control the actuators based on a quality of the signal received by the antenna 110. Such a quality may for example be bit error rate (BER) or signal density.

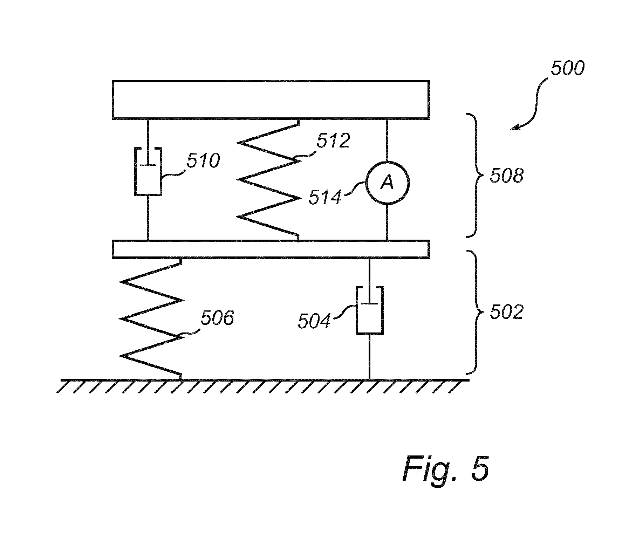

Fig. 5 schematically illustrates the damping arrangement 500 according to an embodiment of the invention. The damping arrangement 500 is here represented by two stages connected in series, where the lower stage 502 comprise a damper 504 connected in parallel with a spring 506 and the upper stage 508 comprise a damper 510 connected in parallel with a spring 512 and an actuator 514. In the present schematic illustration, the damper represents a damping function where kinetic energy is converted to heat while the spring represents the function of energy storage for kinetic energy. Translating the schematic illustration of the damping arrangement 500 in Fig. 5 to the antenna support system 250, the lower stage 502 corresponds to the wire-rope dampers 202 which have the function of both springs and dampers. In the upper stage 508, the actuator 514 corresponds to the pitch and roll actuators 210, 218 which act as active damping elements in the damping arrangement. Furthermore, the spring 512 and damper 510 correspond to the axial dampers of the pitch and roll axles. In the present example, the lower stage 502, i.e. the wire-rope dampers, is configured to reduce vibrations between 5Hz and 200Hz. The wire-rope dampers also function as shock-absorbers. The upper stage 508, i.e. the axial dampers and the pitch and roll actuators, is configured to reduce vibrations between 0Hz and 5Hz. The person skilled in the art readily realizes that the disclosed example is merely one way in which a damping arrangement according to Fig. 5 may be achieved. Many alternative configurations and combinations of damping elements are possible for achieving the desired damping effect.

The sensing device 238 may also be used to detect vibrations and to provide vibration parameters to the first control circuitry for controlling the pitch and roll actuators 210,218. Alternatively a separate sensing device may be used to detect vibrations.

The damping parameters of the damping system, governed by the properties of the damping elements, are typically set in relation to the mass to be damped, the center of gravity and the eigenfrequencies of the system. With the suggested damping arrangement, at least the lower eigenfrequencies of the system can be damped and general vibration noise is reduced.

Even though the invention has been described with reference to a specific exemplifying embodiment, many different alterations, modifications and the like will become apparent for those skilled in the art. For example, the general idea of separating the horizontal alignment platform and the antenna orientation platform is equally suitable for use in land based vehicles where satellite communication is desirable.

Also, it should be noted that parts of the system may be omitted, interchanged or arranged in various ways, yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An antenna support system (250) for arrangement on a moving vessel, said antenna support system comprising:
a lower stabilizing platform (104) comprising a pitch actuator (210) for controlling movement about a pitch axis (306) of said lower stabilizing platform, and a roll actuator (218) for controlling movement about a roll axis (308) of said lower stabilizing platform;
a sensing device (238) configured to detect a pitch orientation and a roll orientation in relation to a horizontal plane (304);
first control circuitry connected to said sensing device and to said pitch actuator and said roll actuator, the first control circuitry being configured to acquire pitch and roll parameters from said sensing device and to control said pitch actuator and said roll actuator to maintain a predetermined orientation of said lower stabilizing platform in relation to said horizontal plane;
an upper directing platform (106) attached to said lower stabilizing platform and comprising an antenna orientation arrangement (108);
second control circuitry connected to said antenna orientation arrangement and configured to control an orientation of said antenna orientation arrangement in response to an input signal indicating a desired antenna orientation;
wherein said first control circuitry and said second control circuitry operate independently of each other.

2. The antenna support system according to claim 1, further comprising a damping arrangement comprising at least one active damper configured to reduce propagation of vibrations from said vessel to said upper directing platform.

3. The antenna support system according to claim 2, wherein said active damper comprises an actuator (210, 218) arranged in parallel with a passive damping element.

4. The antenna support system according to claim 3, wherein said passive damping element comprises an axial damper (212a-b, 217a-b) arranged on at least one of said pitch axis and said roll axis.

5. The antenna support system according to any one of the preceding claims, further comprising a support structure (102) for fixing said lower stabilizing platform (104) to the moving vessel, and at least one damper (202) arranged between said support structure (102) and said lower stabilizing platform (104).

6. The antenna support system according to claim 5, wherein said at least one damper (202) arranged between said support structure (102) and said lower stabilizing platform (104) comprises a passive damping element.

7. The antenna support system according to claim 6, wherein said passive damping element arranged between said support structure (200) and said lower stabilizing platform (104) comprises a wire-rope damper (202).

8. The antenna support system according to any one of the preceding claims, wherein said antenna orientation arrangement (108) comprises:
an antenna holder (242);
an azimuth actuator (226) for controlling an azimuth orientation of an antenna connected to said antenna holder;
an elevation actuator (232) for controlling an elevation of an antenna connected to said antenna holder; and
a polarization actuator (236) for controlling a polarization orientation of an antenna connected to said antenna holder.

9. The antenna support system according to any one of the preceding claims, wherein said sensing device (238) is arranged on said upper directing platform (106).

10. The antenna support system according to any one of the preceding claims, wherein said sensing device is a two-axis inclinometer.

11. The antenna support system according to any one of the preceding claims, wherein said first control circuitry is configured to operate only in response to said acquired pitch and roll parameters from said sensing device.

12. The antenna support system according to any one of the preceding claims, wherein said first control circuitry comprises at least one microcontroller.

13. The antenna support system according to any one of the preceding claims, wherein said second control circuitry is configured to control said antenna orientation arrangement (108) in response to control signals received from an external control unit.

14. Antenna system (100) comprising:
a parabolic antenna (110) connected to an antenna support system (250) according to any one of claims 1 to 13; and
an antenna radome (112);
wherein said parabolic antenna (110) and said upper directing platform (106) comprised in said antenna support system are arranged within said antenna radome (112) and wherein said lower stabilizing platform (104) is arranged outside of said antenna radome.
